# EUROPÄISCHE PATENTSCHRIFT

(11) **EP 4 405 983 B1**
(45) Veröffentlichungstag und Bekanntmachung des Hinweises auf die Patenterteilung: **17.12.2025**
(21) Anmeldenummer: 22789864.0
(22) Anmeldetag: 09.09.2022
(51) Int. Cl.: G21K 1/00

(54) **IONEN-OBERFLÄCHENFALLE UND VERFAHREN ZUM BETREIBEN EINER IONEN-OBERFLÄCHENFALLE**
ION SURFACE TRAP, AND METHOD FOR OPERATING AN ION SURFACE TRAP
PIÈGE À IONS DE SURFACE ET PROCÉDÉ DE FONCTIONNEMENT D'UN PIÈGE À IONS DE SURFACE

(30) Priorität: 21.09.2021 DE 102021124396
(43) Veröffentlichungstag der Anmeldung: 31.07.2024
(73) Patentinhaber: Bundesrepublik Deutschland, vertr. durch das Bundesministerium f. Wirtschaft und Technologie,, 38116 Braunschweig (DE)
(72) Erfinder: RAUPACH, Sebastian, 38116 Braunschweig (DE)
(74) Vertreter: Gramm, Lins & Partner Patent- und Rechtsanwälte PartGmbB
(86) Internationale Anmeldenummer: PCT/EP2022/075085
(87) Internationale Veröffentlichungsnummer: WO 2023/046502

(56) Entgegenhaltungen:
- CN-A- 112 885 951
- JP-A- 2012 109 295
- TODARO S L ET AL: "State Readout of a Trapped Ion Qubit Using a Trap-Integrated Superconducting Photon Detector", ARXIV.ORG, CORNELL UNIVERSITY LIBRARY, 201 OLIN LIBRARY CORNELL UNIVERSITY ITHACA, NY 14853, 31 July 2020 (2020-07-31), XP081731684

## Beschreibung

Die Erfindung betrifft eine Ionen-Oberflächenfalle mit (a) einem Elektrodenpaar, das eine erste Fallen-Elektrode und eine zweite Fallen-Elektrode aufweist und das ausgebildet ist zum Bilden eines Fallenvolumens für zumindest ein Ion beim Anlegen einer elektrischen Wechselspannung, (b) zumindest zwei Gleichspannungselektroden, die angeordnet sind zum Abschließen des Fallenvolumens und/oder Erzeugen eines elektrischen Felds, mittels dem eine Ionen-Position eines in der Ionen-Oberflächenfalle gefangen Ions relativ zur Ionen-Oberflächenfalle veränderbar ist, und (c) einem Sensor zum Erfassen von Photonen, die von zumindest einen Ion ausgesendet wurden.

Derartige Ionen-Oberflächenfallen werden dazu verwendet, ein Ion, zwei Ionen oder mehrere (also 3, 4, 5,..., N) Ionen in einem vorgegebenen Raumgebiet zu halten. Beispielsweise wird eine Ionen-Oberflächenfalle in einer Atomuhr oder einem Quantencomputer verwendet. Eine Atomuhr und/oder ein Quantencomputer mit einer erfindungsgemäßen Ionen-Oberflächenfalle sind ebenfalls Gegenstände dieser Erfindung.

Ionen-Oberflächenfallen werden häufig auf einem Chip realisiert. Zum Detektieren von Licht, das von dem Ion ausgesandt wird, werden spezielle Sensoren auf dem Chip angeordnet, wie beispielsweise im Artikel "State Readout of a Trapped Ion Qubit Using a Trap-Integrated Superconducting Photon Detector" von Todaro et al., Phys. Rev. Lett. (2021) beschrieben ist.

Aus dem Artikel "State readout of a trapped ion qubit using a trap-integrated superconducting photon detector" von Todaro et al in Physical Review Letters, Vol. 126, 2021, No. 1 ist eine gattungsgemäße Ionen-oberflächenfalle bekannt, mit der Qubits ausgelesen werden können. Zwischen dem Ion und dem Detektor befinden sich keine optischen Elemente, sodass die Ionen-Fluoreszenz verwendet werden kann, um die Quanteneffizienz des Detektors sowie deren Abhängigkeit von dem Inzidenzwinkel und der Inzidenzpolarisation zu messen.

Der Beitrag "UV-sensitive superconducting nanowire single photon detectors for integration in an ion trap" von Slichter et al, in Optics Express, Vol. 25, 2017, No. 8 S. 8705-8720 beschreibt einen Einzelphoton-Detektor, der in einer Paul-Falle mit planaren Radiofrequenz-Elektroden eingesetzt wird.

Das Paper "Fluorescence detection of a trapped ion with a monolithically integrated single-photon-counting avalanche diode" von Setzer et al, in: arXiv: 2105.01235v2 [quant-ph], vom 07.07.2021 (S 1-6) DOI: 10.48550/arXiv.2105.01235 zeigt eine gattungsgemäße Ionen-oberflächenfalle zur Detektion von Fluoreszenz-Licht eines in einer Falle gefangenen Ions unter Verwendung von Einzelphoton-Lawinenfotodioden, die zusammen mit einer Oberflächen-Ionenfalle auf einem Chip integriert sind. Die DE 10 2019 114 842 A1 beschreibt eine Ionenfalle zum Halten von zumindest einem Ion in einem Raumbereich, der durch ein ponderomotives Potential definiert ist. Elektroden einer Elektrodenstruktur, die um den Raumbereich herum angeordnet ist, werden so angesteuert, dass Ionen in der Ionenfalle von einem Laserstrahl erfasst werden.

Aus der DE 10 2018 121 942 B3 ist eine Ionenfalle bekannt, die zwei Elektroden aufweist, die dazu ausgebildet sind, ein elektrisches Feld zu erzeugen, das zumindest in einem Bereich ein attraktives ponderomotives Potential umfasst. Ein elektrischer Resonator versorgt Elektroden der Ionenfalle mit Wechselspannung und weist einen Schwingkreis auf, der innerhalb der Vakuumkammer angeordnet ist. Dadurch kann das Wechselspannungsfeld der Ionenfalle leichter kalibriert werden.

Die US 6 710 334 B1 beschreibt ein Quadrupol-Ionenfallen-Massenspektrometermit für große Moleküle durch Verwendung kryogener Teilchendetektoren als Moleküldetektoren. Kryogene Teilchendetektoren haben eine massenunabhängige Detektionseffizienz und zeigen keine Abnahme der Detektionseffizienz bei zunehmender Molekülmasse im Vergleich zu ionisierenden Detektoren, die in herkömmlichen Quadrupol-Ionenfallen-Massenspektrometern verwendet werden.

In der US 5 994 694 A ist ein Ultrahochmassen-Flugzeitmassenspektrometer, das einen kryogenen Teilchendetektor als Ionendetektor verwendet. Durch den Kryodetektor wird Leistung und Empfindlichkeit verbessert. Es wird ein kryogen gekühlter Nb-Al₂O₃-Nb-Supraleiter-Isolator-Supraleiter (SIS)-Tunnelübergang-Detektors verwendet, der bei 1,3 K arbeitet. Der STJ-Detektor hat die Fähigkeit zur Ladungsunterscheidung. Da der kryogene STJ-Detektor auf die Ionenenergie anspricht und nicht auf die Erzeugung von Sekundärelektronen angewiesen ist, kann er große Molekülionen mit einer geschwindigkeitsunabhängigen Effizienz von nahezu 100 % erkennen.

Der Artikel "Quasiparticle trapping and the quasiparticle multiplier" von N.E. Boot, in: Applied Physics Letters, Vol. 50 1987 No. 5, S. 293-295, ISSN 0003-6951 (P) beschreibt das detektieren von Phononen, elektromagnetischer Strahlung und Kernpartikeln mittels supraleitender Tunnelkontakte.

Die WO 2015/ 128 438 A1 beschreibt ein System mit einem Kryostaten und einer Oberflächenelektrodenfalle auf einem Siliziumsubstrat. Auf dessen Vorderseite befinden sich planare Elektroden, die so konfiguriert sind, dass sie ein Einfangpotenzial erzeugen. Eine erste Hochfrequenzelektrode erstreckt sich parallel zur Vorderseite des Substrats, eine Gleichstromelektrode parallel zur Vorderseite und grenzt an die erste Hochfrequenzelektrode an und ist von dieser elektrisch isoliert. Die Oberflächenelektrodenfalle ist im Kryostaten angeordnet, der die Oberflächenelektrodenfalle auf höchstens 150 K kühlt.

Es hat sich als sehr aufwendig herausgestellt, beispielsweise Fluoreszenzstrahlung, die von dem Ion ausgesandt wird, zu detektieren.

Der Erfindung liegt die Aufgabe zugrunde, das Detektieren von Photonen, die von dem gefangenen Ion ausgesandt werden, zu verbessern.

Die Erfindung löst das Problem durch eine gattungsgemäße Ionen-Oberflächenfalle, bei der der Sensor ein energiesensitiv messender Supraleiter-Sensor ist, der eine Supraleiterschicht-Trennschicht-Supraleiterschicht-Struktur hat und bei dem zumindest eine der Supraleiterschichten zumindest die erste Fallen-Elektrode und/oder Gleichspannungselektrode bildet.

Die Erfindung löst das Problem zudem durch ein Verfahren zum Betreiben einer solchen Ionen-Oberflächenfalle, das die folgenden Schritte aufweist: (i) Einbringen eines Ions in die Ionen-Oberflächenfalle, (ii) Anlegen einer Gleichspannung an die Gleichspannungselektroden, sodass das Ion in der Ionen-Oberflächenfalle gefangen bleibt, und (iii) Detektieren zumindest eines Photons, das vom Ion abgegeben wurde, mittels des Sensors.

Vorteilhaft an der Erfindung ist, dass vom Ion abgegebene Strahlung nur einen kurzen Weg zurücklegen muss, um vom Sensor erfasst zu werden und keine optischen Elemente wie optische Fenster, Linsen, Glasfasern etc. durchqueren muss. Die Wahrscheinlichkeit, auf dem Weg vom Ion zum Sensor absorbiert zu werden, ist daher gering.

Aufgrund der räumlichen Nähe des Sensors zum gefangenen Ion kann der Sensor zudem Photonen in einem vergleichsweise weiten Raumwinkelbereich detektieren. Durch den erfindungsgemäßen Aufbau kann der Sensor zudem eine vergleichsweise große räumliche Ausdehnung besitzen und so einen noch größeren Raumwinkelbereich abdecken, als wenn er auf den Raum zwischen den Elektroden beschränkt wäre.

Günstig ist zudem, dass die Erfindung in der Regel eine höhere Integrationsdichte erlaubt. Alternativ oder zusätzlich ergibt sich, insbesondere bei einer Reihenfertigung, eine vereinfachte Herstellung.

Die Erfindung basiert insbesondere auf der Idee, die aus dem Stand der Technik bekannte Trennung von Sensor und Fallen-Elektrode aufzuheben. In anderen Worten bildet zumindest eine Fallenelektrode einen Teil der Struktur, die der Detektion einzelner Photonen dient.

Zwischen den beiden Supraleiterschichten herrscht vorzugsweise eine konstante Potentialdifferenz. Das Potenzial der beiden Supraleiterschichten oszilliert jedoch vorzugsweise. Beispielsweise oszilliert das Potential gegenüber einem Nullpotential einer Spannungsquelle, die ausgebildet ist zum Anlegen einer gemeinsamen Spannung an beide Supraleiterschichten, mit einer Fallen-Frequenz, bei der es sich um eine Radiofrequenz handelt.

Wird - wie gemäß einer bevorzugten Ausführungsform vorgesehen - eine Gleichspannungselektrode verwendet, die aus zumindest zwei Teil-Elektroden besteht, kann zumindest eine dieser Teil-Elektroden als Sensor ausgebildet sein.

Im Rahmen der vorliegenden Beschreibung wird unter einer Supraleiterschicht eine Schicht eines Materials verstanden, die bei einer Temperatur unterhalb einer Sprungtemperatur supraleitend wird. Vorzugsweise ist die Supraleiterschicht aus einem Hochtemperatur-Supraleiter aufgebaut. Günstig ist es, wenn der Hochtemperatur-Supraleiter eine Sprungtemperatur oberhalb von 77 Kelvin hat.

Unter dem Elektrodenpaar wird die Gesamtheit aus der ersten Fallen-Elektrode und der zweiten Fallen-Elektrode verstanden. Es ist möglich, nicht aber notwendig, dass zumindest eine der Fallen-Elektroden aus 2, 3 oder mehr Teil-Elektroden aufgebaut ist. Es ist zudem möglich, nicht aber notwendig, dass einzelne Teil-Elektroden gegeneinander elektrisch isolierte sind. Alternativ sind die einzelnen Teil-Elektroden miteinander elektrisch kontaktiert, sodass sie auf dem gleichen Potenzial liegen.

Wird an das Elektrodenpaar die Fallen-Frequenz angelegt, bildet sich ein Fallenvolumen. Das Fallenvolumen ist derjenige Raumbereich, den das Ion nicht verlassen kann.

Unter den Gleichspannungselektroden werden solche Elektroden verstanden, mittels denen ein statisches elektrisches Einschlussfeld erzeugt werden kann. Das Einschlussfeld ist vorzugsweise so ausgebildet, dass das Fallenvolumen in alle Raumrichtungen geschlossen ist.

Günstig ist es, wenn eine Supraleiterschicht-Dicke der Supraleiterschicht zwischen 5 nm und 500 nm liegt.

Bei der Trennschicht handelt es sich um eine Schicht, die ihrerseits aus mehreren Teilschichten aufgebaut sein kann. Günstig ist es, wenn die Trennschicht eine Trennschicht-Dicke zwischen 1 nm und 100 nm hat.

Der Sensor ist so ausgebildet, dass dann, wenn ein Photon auf die erste Supraleiterschicht oder die zweite Supraleiterschicht trifft, Cooper-Paare getrennt werden und freie Elektronen entstehen, die durch die Trennschicht tunneln und einen Stromimpuls bewirken. Diese Stromimpuls kann detektiert und daraus die Energie des Photons berechnet werden.

Günstig ist es, wenn die Ionen-Oberflächenfalle auf einem Chip realisiert ist. Insbesondere sind das Elektrodenpaar, die Gleichspannungselektroden und der Sensor integrale Bestandteile des Chips. Die genannten Strukturen sind insbesondere durch sukzessives Abscheiden verschiedener Schichten aufeinander und/oder Heraus-ätzen von Teilen der Schichtstruktur hergestellt.

Günstig ist es, wenn die Trennschicht eine Isolatorschicht ist, die zwischen den Supraleiterschichten angeordnet ist.

Vorzugsweise besitzt die Ionen-Oberflächenfalle eine Spannungsquelle, die so mit den Supraleiterschichten verbunden ist, dass zwischen den beiden Supraleiterschichten eine konstante Potentialdifferenz besteht.

Gemäß einer bevorzugten Ausführungsform besitzt die Ionen-Oberflächenfallen einen Tunnelstromänderungsdetektor zum, insbesondere quantitativen und/oder zeitaufgelösten, Detektieren einer Tunnelstromänderung eines Tunnelstroms von der ersten Supraleiterschicht durch die Trennschicht in die zweite Supraleiterschicht.

Vorzugsweise ist die Isolatorschicht so angeordnet, dass der Tunnelstromänderungsdetektor eine Tunnelstromänderung detektiert, wenn mindestens ein Photon auf eine der Supraleiterschichten oder die Trennschicht trifft.

Unter dem Tunnelstromänderungsdetektor wird ein Detektor verstanden, mit dem eine Änderung des Tunnelstroms detektierbar ist. Insbesondere ist ein Tunnelstrommessgerät, mittels dem der Tunnelstrom gemessen werden kann, gleichzeitig ein Tunnelstromänderungsdetektor.

Günstig ist es, wenn die Trennschicht eine oder mehrere kleinvolumige Sammel-Schichten aus einem - zusätzlich zu den äußeren supraleitenden Schichten des Sensors - weiteren supraleitenden Material aufweist, dessen Cooper-Paar-Bindungsenergie, und damit dessen Energielücke im Einzelelektronenenergieschema in der Nähe der Fermikante, geringer ist als die des weiter außen liegenden supraleitenden Materials. Auf diese Weise können Quasiteilchen, die in der Sammelschicht in einen etwas niedrigeren Energiezustand übergegangen sind, nicht ohne Weiteres in den äußeren Supraleiter mit größerer Energielücke übergehen und dort abfließen, siehe N. E. Booth: "Quasiparticle trapping and the quasi particle multiplier", Appl. Phys. Lett. 50, 293 (1987). Die Trennschicht ist damit vorzugsweise so aufgebaut, dass in die Trennschicht diffundierende Elektronen und/oder Quasiteilchen sich dort anreichern und eine Signalerhöhung des Supraleiter-Sensors bewirken, indem sie mehrfach für Tunnelprozesse durch die Trennschicht zur Verfügung stehen und so mehrfach zum Gesamtsignal beitragen.

Günstig ist es, wenn die Ionen-Oberflächenfalle ein Substrat besitzt, auf das die erste Fallen-Elektrode und die zweite Fallen-Elektrode, die erste Supraleiterschicht, die zweite Supraleiterschicht und die Trennschicht aufgebracht sind. Es sei darauf hingewiesen, dass darunter nicht zwingend verstanden wird, dass die entsprechende Struktur, wie beispielsweise die erste Fallen-Elektrode, direkt auf das Substrat aufgebracht ist. Es ist vielmehr auch möglich, dass eine der genannten Strukturen auf eine andere der genannten Strukturen aufgebracht wird, die ihrerseits mittelbar oder unmittelbar dem Substrat verbunden ist. Maßgeblich ist lediglich, dass die erste Fallen-Elektrode, die zweite Fallen-Elektrode, die erste Supraleiterschicht, die zweite Supraleiterschicht und die Trennschicht vorzugsweise eine einstückige Einheit mit dem Substrat bilden.

Bei dem Substrat kann es sich beispielsweise um einen Halbleiter, Quarzglas oder Korund handeln. Andere Substratmaterialien sind möglich.

Günstig ist es, wenn die zweite Supraleiterschicht elektrisch gegenüber der ersten Supraleiterschicht isoliert und potentialgetrennt ist. Unter dem Merkmal, dass die zwei Supraleiterschichten potentialgetrennt sind, wird insbesondere verstanden, dass diese gegeneinander isoliert und nicht miteinander kontaktiert sind. Es ist daher möglich, dass die beiden Supraleiterschichten auf unterschiedlichen elektrischen Potenzialen liegen. Das ist beispielsweise bei Nanodrähten anders, die vollständig auf einem Potenzial relativ zu einem Gegenelement liegen müssen, wobei das Gegenelement auf dem gleichen Potenzial wie eine der Fallen-Elektroden liegt.

Vorzugsweise ist die Spannungsquelle ausgebildet und kontaktiert zum Anlegen einer gemeinsamen Spannung an beide Supraleiterschichten. Die gemeinsame Spannung ist vorzugsweise eine Wechselspannung, wenn mindestens eine der Fallenelektroden als Photonen-Detektor ausgebildet ist. Die gemeinsame Spannung ist vorzugsweise eine Gleichspannung, wenn mindestens eine der Gleichspannungselektroden als Photonen-Detektor ausgebildet ist.

Vorzugsweise ist die Spannungsquelle so ausgebildet und mit den Supraleiterschichten verbunden, dass eine Potentialdifferenz zwischen beiden Supraleiterschichten zeitlich konstant ist. Hierunter wird insbesondere verstanden, dass eine Potentialdifferenz so klein ist, dass die Schwankung einen Unsicherheitsbeitrag von höchstens 50% zur Gesamtunsicherheit der Messung der Tunnelstromänderung leistet. Vorzugsweise schwankt die Potentialdifferenz um höchstens ein Prozent pro Sekunde.

Wenn die Spannungsquelle - wie gemäß einer bevorzugten Ausführungsform vorgesehen - eine Wechselspannungsquelle ist, besitzt sie vorzugsweise ein Hochpassfilter, an den eine oder mehrere Wechselspannungsquellen mit derselben Frequenz angeschlossen sind.

Die Ionen-Oberflächenfalle besitzt vorzugsweise einen Magnetfelderzeuger, der ein Magnetfeld in einer Trennschicht-Ebene der Trennschicht erzeugt. Insbesondere ist dadurch ein Hintergrund-Tunnelstrom unterdrückbar.

Sollen mehrere Ionen in der Ionen-Oberflächenfallen gefangen werden, was einen bevorzugten Ausführungsform darstellt, ist es vorteilhaft, wenn zumindest mit einer hinreichend hohen Wahrscheinlichkeit ermittelt werden kann, von welchem Ion ein Photon stammt, das vom Supraleiter-Sensor detektiert wird. Günstig ist es deshalb, wenn zumindest eine der Supraleitungsschichten zumindest zwei voneinander räumlich getrennte und gegeneinander elektrisch isolierte Detektionsabschnitte aufweist.

Günstig ist es, wenn die Detektionsabschnitte so mit dem Tunnelstromänderungsdetektor verbunden sind, dass ein Auftreffort des Photons ermittelbar ist. Unter dem Merkmal, dass der Auftreffort des Photons ermittelbar ist, wird insbesondere verstanden, dass mit einer Sicherheit von zumindest 75%, insbesondere zumindest 85%, beispielsweise zumindest 90%, ermittelt werden kann, von welchem Ion ein detektiertes Photon stammt.

Vorzugsweise besitzt die Ionen-Oberflächenfalle einen Verdampfer zum Erzeugen eines Gases aus Teilchen eines chemischen Reinstoffs, beispielsweise eines Metalls, insbesondere eines Alkalimetalls, und einen Photoionisator zum Ionisieren von Metallatomen, insbesondere Alkalimetallatomen, sodass daraus Ionen entstehen. Der Photoionisator besitzt vorzugsweise eine Elektrodenanordnung und eine Ansteuereinheit, die mit der Elektrodenanordnung so verbunden ist, dass die erzeugten Ionen einzelnen in die Ionen-Oberflächenfalle einbringbar sind.

Günstig ist es, wenn die Ionen-Oberflächenfalle eine Auswerteeinheit aufweist, die mit dem Tunnelstromänderungsdetektor verbunden ist. Die Auswerteeinheit ist vorzugsweise ausgebildet zum Durchführen eines erfindungsgemäßen Verfahrens.

Im Rahmen des erfindungsgemäßen Verfahrens umfasst der Schritt des Einbringens eines Ions in die Ionen-Oberflächenfalle vorzugsweise die Schritte (i) Verdampfen eines Reinstoffs, beispielsweise von Metall, insbesondere eines Alkalimetalls, sodass ein Dampf entsteht, (ii) Photoionisieren des Dampfs, insbesondere von Metallatomen des Metalldampfs und (iii) Bewegen zumindest eines Ions des Dampfs in ein Fallenvolumen der lonen-Oberflächenfalle.

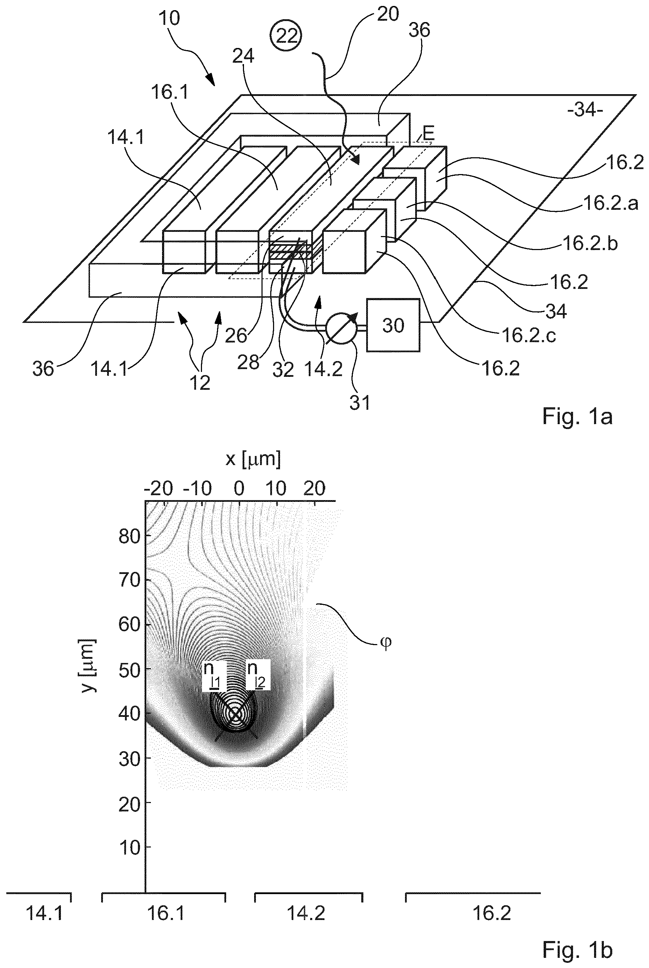

Im Folgenden wird die Erfindung anhand der beigefügten Zeichnungen näher erläutert. Dabei zeigt
- Figur 1: in der Teilfigur 1a eine schematische perspektivische Ansicht einer erfindungsgemäßen Ionen-Oberflächenfalle und in der Teilfigur 1b einen Querschnitt durch das elektrische Potenzial, das beim Anlegen des elektrischen Wechselfelds an das Elektrodenpaar entsteht. Die beiden Kreuze zeigen die Richtung der Achse der normalen Moden n⊥1 und n⊥2.

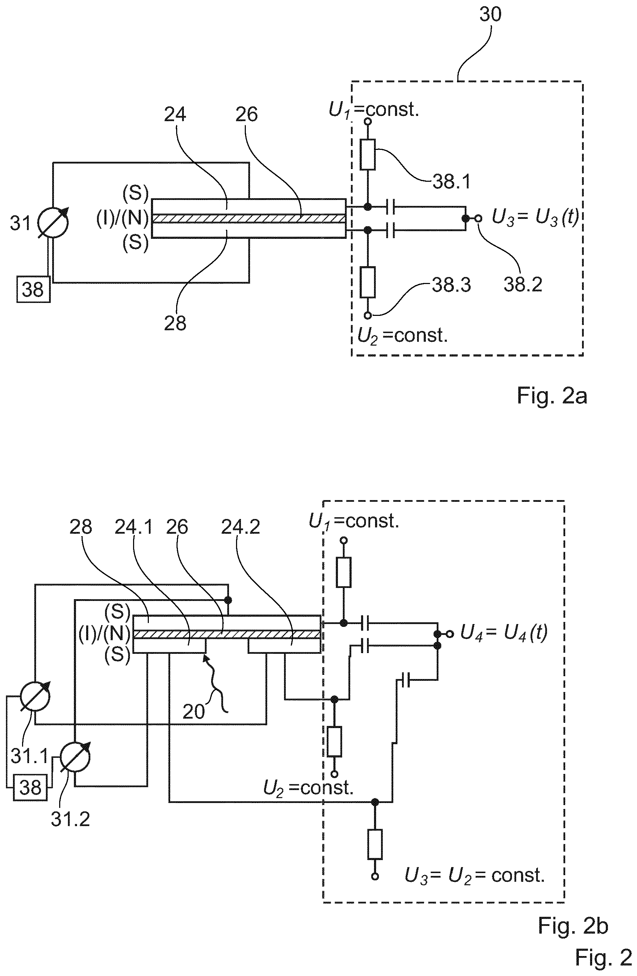

- Figur 2: zeigt in der Teilfigur 2a ein Schaltbild der Spannungsquelle, die mit den beiden Supraleitungsschichten verbunden ist, gemäß einer ersten Ausführungsform und in der Teilfigur 2b ein Schaltbild der Spannungsquelle, die mit den beiden Supraleitungsschichten verbunden ist, gemäß einer zweiten Ausführungsform.

Figur 1a zeigt eine Ionen-Oberflächenfalle 10 mit einem Elektrodenpaar 12, das eine erste Fallen-Elektrode 14.1 und eine zweite Fallen-Elektrode 14.2 umfasst. Die Ionen-Oberflächenfalle 10 besitzt zudem zwei Gleichspannungselektroden 16.1, 16.2.

Mittels eines Supraleiter-Sensors 18 kann ein schematisch eingezeichnetes Photon 20 detektiert werden, das von einem ebenfalls schematisch eingezeichneten Ion 22 ausgesendet wurde. Die Gleichspannungselektroden 16.1, 16.2 sind mit einer nicht eingezeichneten Positionier-Spannungsquelle verbunden, die ausgebildet ist zum Abgeben einer Spannung, sodass das Ion 22 an einer vorgegebenen Position P₂₂ positioniert wird.

Der Supraleiter-Sensor 18 besitzt eine erste Supraleiterschicht 24, eine Trennschicht 26 und eine zweite Supraleiterschicht 28. Die erste Supraleiterschicht besteht beispielsweise aus Niob oder Tantal oder aus einem Hochtemperatursupraleiter, beispielsweise Yttriumbariumkupferoxid. Die Trennschicht 26 besteht vorzugsweise aus einem Isolator wie Aluminiumoxid und kann eine Sammelschicht beispielsweise aus als Aluminium aufweisen Die zweite Supraleiterschicht besteht vorzugsweise aus demselben Material wie die erste Supraleiterschicht.

Figur 1a zeigt zudem eine Spannungsquelle 30, die mit den Supraleiterschichten 24, 26 verbunden ist. Die Spannungsquelle 30 beaufschlagt die erste Supraleiterschicht 24 mit einer ersten Wechselspannung U_{W,24}, die eine Fallen-Frequenz fₜ hat, und die zweite Supraleiterschicht 26 mit einer zweiten Wechselspannung U_{w,26}, die ebenfalls die Fallen-Frequenz fₜ hat. Eine Potentialdifferenz ΔU = | U_{W,24} - U_{W, 26}| ist konstant und kleiner als die Energiebandlücke des verwendeten Supraleiters geteilt durch die Elementarladung. Im Fall von Niob ergibt sich daraus beispielsweise eine geeignete Spannung von ca. 1 mV.

Zwischen den beiden Supraleiterschichten 24, 26 und damit durch die Trennschicht 26 fließt ein Tunnelstrom I₂₆, der von einem Tunnelstromänderungsdetektor 31 erfasst wird.

Schematisch ist eingezeichnet, dass die Trennschicht 26 eine Sammel-Schicht 32 aufweisen kann, die im vorliegenden Fall aus Aluminium besteht. Die Sammel-Schicht 32 ist nicht separat kontaktiert, sondern weist eine Kontaktfläche zum Isolator und zur jeweiligen Supraleiterschicht auf.

Die Fallen-Elektroden 14.1, 14.2 und die Gleichspannungselektroden 16.1, 16.2 sind auf einem Substrat 34 angeordnet und beispielsweise durch sukzessiven Schichtaufbau und nachfolgendes Abätzen hergestellt.

Figur 1a zeigt zudem schematisch einen Magnetfelderzeuger 36 in Form eines Magneten, der ein Magnetfeld in einer Trennschicht-Ebene E und parallel zu ihr erzeugt. Die Trennschicht 26 erstreckt sich entlang der Trennschicht-Ebene E. Das Magnetfeld dient dazu, die Amplitude von intrinsischen Hintergrundströmen zu unterdrücken, wie die des Josephson-Gleichstroms und geometrieabhängige Resonanzeffekte des Josephson-Wechselstroms, die in der Strom-Spannungs-Charakteristik zu spannungsabhängigen Spitzen des Gleichstroms führen (sog. "Fiske-Stufen").

Figur 1b zeigt einen Querschnitt durch das Fallenpotenzial φ, das beim Anlegen des elektrischen Wechselfelds an das Elektrodenpaar 12 entsteht. Das Kreuz zeigt die erwartete Position des Ions.

Figur 1a zeigt, dass die Gleichspannungselektrode 16.2 aus, zwei, drei oder mehr, im vorliegenden Fall drei Teil-Elektroden 16.2.a, 16.2.b und 16.2.c, bestehen kann.

Figur 2a zeigt die Schaltung der Spannungsquelle 30, die drei Teil-Spannungsquellen 38.1, 38.2, 38.3 aufweist. Die Teil-Spannungsquellen 38.1, 38.3 geben jeweils konstante Spannungen U₁, U₂ ab. Die Teil-Spannungsquelle 38.2 gibt eine reine Wechselspannung U₃ = Uw mit der Fallen-Frequenz fₜ ab. Die Spannungen beziehen sich jeweils auf das Potenzial des Substrats 34.

Figur 2b zeigt die Schaltung, wenn die zweite Supraleiterschicht 24 aus n (hier: n = 2) Teil-Elektroden 24.1, 24.2 aufgebaut ist. In diesem Fall existieren n Tunnelstromänderungsdetektoren 31.1, 31.2, die jeweils eine der Teil-Elektrode 24.1, 24.2 kontaktieren. Jede Teil-Elektrode ist ein Detektionsabschnitt.

Die Spannungsquelle 30 besitzt n Teil-Spannungsquellen zum Abgeben einer jeweils gleichen Gleichspannung U₁ = U₂ = U_{g} und eine Teil-Spannungsquelle zum Abgeben der Wechselspannung U₄ = Uw mit der Fallen-Frequenz fₜ der Gleichspannung.

Trifft das schematisch eingezeichnete Photon 20 beispielsweise auf die erste Teil-Elektrode 14.1, so bewirkt dies eine Änderung des Tunnelstroms I₂₆ von der ersten Teil-Elektrode 14.1 zur zweiten Supraleitungsschicht 28. Der Tunnelstromänderungsdetektor 31 besitzt vorzugsweise n Teil-Tunnelstromänderungsdetektoren, hier: die Teil-Tunnelstromänderungsdetektoren 31.1, 31.2. Die Änderung des Tunnelstroms von der ersten Teil-Elektrode 14.1 zur zweiten Supraleiterschicht 28 wird vom ersten Teil-Tunnelstromänderungsdetektor 31.1 erfasst.

Die Änderung des Tunnelstroms wird von einer schematisch eingezeichneten Auswerteeinheit 38, die mit dem Tunnelstromänderungsdetektor 31 verbunden ist, erfasst, die aus dem Tunnelstrom I₂₆ die Energie des Photons 20 berechnet und den Zeitpunkt der Detektion registriert.

### Bezugszeichenliste

- 10: Ionen-Oberflächenfalle
- 12: Elektrodenpaar
- 14.1, 14.2: Fallen-Elektrode
- 16.1, 16.2: Gleichspannungselektrode
- 18: Supraleiter-Sensor

- 20: Photon
- 22: Ion
- 24: erste Supraleiterschicht
- 24.1, 24.2: Teil-Elektroden
- 26: Trennschicht
- 28: zweite Supraleiterschicht

- 30: Spannungsquelle
- 31: Tunnelstromänderungsdetektor
- 31.1, 31.2: Teil-Tunnelstromänderungsdetektor
- 32: Sammel-Schicht
- 34: Substrat
- 36: Magnetfelderzeuger
- 38: Auswerteeinheit
- 38.1, 38.2, 38.3: Teil-Spannungsquelle

- ΔU: Potentialdifferenz
- fₜ: Fallen-Frequenz
- E: Trennschicht-Ebene
- U_{g}: Gleichspannung
- U_{w}: Wechselspannung

## Patentansprüche

1. Ionen-Oberflächenfalle (10) mit
(a) einem Elektrodenpaar (12), das
eine erste Fallen-Elektrode (14.1) und eine zweite Fallen-Elektrode (14.2) aufweist und das ausgebildet ist zum Bilden eines Fallenvolumens für zumindest ein Ion (22) beim Anlegen einer elektrischen Wechselspannung,
(b) zumindest zwei Gleichspannungselektroden (16.1, 16.2), die angeordnet sind zum Abschließen des Fallenvolumens und/oder Erzeugen eines elektrischen Felds, mittels dem eine Ionen-Position eines in der Ionen-Oberflächenfalle (10) gefangenem Ions (22) relativ zur Ionen-Oberflächenfalle (10) veränderbar ist, und
(c) einem Sensor zum Erfassen von Photonen (20), die vom zumindest einen Ion (22) ausgesendet werden,
**dadurch gekennzeichnet, dass**
(d) der Sensor ein energiesensitiv messender Supraleiter-Sensor (18) ist, der eine Supraleiterschicht-Trennschichtschicht-Supraleiterschicht-Struktur hat, die eine erste Supraleiterschicht (24), eine Trennschicht (26) und eine zweite Supraleiterschicht (28) aufweist, und
(e) mindestens die erste Supraleiterschicht (24) die erste Fallen-Elektrode (14.1) bildet.

2. Ionen-Oberflächenfalle (10) nach Anspruch 1, **dadurch gekennzeichnet, dass**
(a) die Trennschicht (26) eine Isolatorschicht ist, die zwischen den Supraleiterschichten (24, 28) angeordnet ist,
(b) eine Spannungsquelle (30) so mit den Supraleiterschichten (24,28) verbunden ist, dass sich eine konstante Potentialdifferenz (ΔU) zwischen den Supraleiterschichten (24, 28) ergibt,
(c) die Ionen-Oberflächenfalle (10) einen Tunnelstromänderungsdetektor (31) zum Detektieren einer Tunnelstromänderung eines Tunnelstroms (I₂₆) durch die Trennschicht (26) aufweist und
(d) die Isolatorschicht so angeordnet ist, dass der Tunnelstromänderungsdetektor (31) eine Tunnelstromänderung detektiert, wenn ein Photon (20) auf eine der Supraleiterschichten (24, 28) oder die Isolatorschicht trifft.

3. Ionen-Oberflächenfalle (10) nach Anspruch 2, **dadurch gekennzeichnet, dass**
(a) die Trennschicht (26) eine oder mehrere normalleitende Sammel-Schichten (32) aufweist und
(b) die Trennschicht (26) so aufgebaut ist, das in die Trennschicht (26) diffundierende Elektronen sich dort anreichern und eine Signalerhöhung des Supraleiter-Sensors (18) bewirken.

4. Ionen-Oberflächenfalle (10) nach einem der vorstehenden Ansprüche, **gekennzeichnet durch**
(a) ein Substrat (34), auf das die erste Fallen-Elektrode (14.1) und die zweite Fallen-Elektrode (14.2), die erste Supraleiterschicht (24), die zweite Supraleiterschicht (28) und die Trennschicht (26) aufgebracht sind,
(b) wobei die zweite Supraleiterschicht (28) elektrisch gegenüber der ersten Supraleiterschicht (24) isoliert und potentialgetrennt ist und
(c) wobei die zweite Fallen-Elektrode (14.2) gegenüber der ersten Fallen-Elektrode (14.1) isoliert und potentialgetrennt ist.

5. Ionen-Oberflächenfalle (10) nach einem der Ansprüche 2 oder 3, **dadurch gekennzeichnet, dass**
die Spannungsquelle (30) ausgebildet ist zum Anlegen einer gemeinsamen Wechselspannung (Uw) an beide Supraleiterschichten (24, 28).

6. Ionen-Oberflächenfalle (10) nach einem der vorstehenden Ansprüche, **gekennzeichnet durch** einen Magnetfelderzeuger (36), der ein Magnetfeld in einer Trennschicht-Ebene (E) der Trennschicht (26) erzeugt, sodass ein Hintergrund-Tunnelstrom unterdrückbar ist.

7. Ionen-Oberflächenfalle (10) nach einem der Ansprüche 2 bis 6, **dadurch gekennzeichnet, dass**
(a) zumindest eine der Supraleitungsschichten (24, 28) zumindest zwei voneinander räumlich getrennte und gegeneinander elektrisch isolierte Detektionsabschnitte (24.1, 24.2) aufweist und dass
(b) die Detektionsabschnitte (24.1, 24.2) so mit dem Tunnelstromänderungsdetektor (31) verbunden sind, dass ein Auftreffort des Photons (20) ermittelbar ist.

8. Ionen-Oberflächenfalle (10) nach einem der vorstehenden Ansprüche, **gekennzeichnet durch** eine Auswerteeinheit (38), die ausgebildet ist zum automatischen Durchführen eines Verfahrens gemäß einem der Ansprüche 9 oder 10.

9. Verfahren zum Betreiben einer Ionen-Oberflächenfalle (10) nach einem der vorstehenden Ansprüche, **gekennzeichnet durch** die Schritte:
(i) Einbringen eines Ions (22) in die Ionen-Oberflächenfalle (10),
(ii) Anlegen einer Gleichspannung an die Gleichspannungselektroden (16.1, 16.2), sodass das Ion (22) in der Ionen-Oberflächenfalle (10) gefangen bleibt, und
(iii) Detektieren zumindest eines Photons (20), das vom Ion (22) abgegeben wurde, mittels des Supraleiter-Sensors (18).

10. Verfahren zum Betreiben einer Ionen-Oberflächenfalle (10) nach Anspruch 9, **dadurch gekennzeichnet, dass** der Schritt des Einbringen eines Ions (22) in die Ionen-Oberflächenfalle (10) die folgenden Schritte umfasst:
(i) Verdampfen eines Reinstoffs, sodass ein Dampf entsteht,
(ii) Photoionisieren des Dampfs und
(iii) Bewegen zumindest eines Ions (22) des Dampfs in ein Fallenvolumen der Ionen-Oberflächenfalle (10).

## Claims

1. An ion surface trap (10) with
(a) an electrode pair (12) that
comprises a first trap electrode (14.1) and a second trap electrode (14.2) and is configured to form a trap volume for at least one ion (22) when an electrical AC voltage is applied,
(b) at least two DC voltage electrodes (16.1, 16.2) that are arranged to close the trap volume and/or to generate an electrical field, by means of which an ion position of an ion (22) trapped in the ion surface trap (10) relative to the ion surface trap (10) can be altered, and
(c) a sensor for detecting photons (20) emitted by at least one ion (22),
**characterized in that**
(d) the sensor is an energy-sensitive superconductor sensor (18) with a superconductor layer - separating layer - superconductor layer structure, comprising a first superconductor layer (24), a separating layer (26), and second superconductor layer (28) and
(e) at least the first superconductor layer (24) forms the first trap electrode (14.1).

2. The ion surface trap (10) according to claim 1, **characterized in that**
(a) the separating layer (26) is an insulator layer arranged between the superconductor layers (24, 28),
(b) a voltage source (30) is connected to the superconductor layers (24, 28) such that it results in a constant different in potential (ΔU) between the superconductor layers (24, 28),
(c) the ion surface trap (10) comprises a tunnel current change detector (31) for detecting a change in a tunnel current (I₂₆) through the separating layer (26), and
(d) the insulator layer is arranged in such a way that the tunnel current change detector (31) detects a change in a tunnel current when a photon (20) strikes one of the superconductor layers (24, 28) or the insulator layer.

3. The ion surface trap (10) according to claim 2, **characterized in that**
(a) the separating layer (26) comprises one or multiple normally conducting collection layers (32) and
(b) the separating layer (26) is structured in such a way that electrons diffusing in the separating layer (26) are enriched there and cause a signal increase in the superconductor sensor (18).

4. The ion surface trap (10) according to one of the preceding claims, **characterized by**
(a) a substrate (34) on which the first trap electrode (14.1) and the second trap electrode (14.2), the first superconductor layer (24), the second superconductor layer (28) and the separating layer (26) are mounted,
(b) wherein the second superconductor layer (28) is insulated and potential-separated from the first super conductor layer (24), and
(c) wherein the second trap electrode (14.2) is insulated and potential-separated from the first trap electrode (14.1).

5. The ion surface trap (10) according to one of the claims 2 or 3, **characterized in that**
the voltage source (30) is designed to apply a common AC voltage (Uw) to both superconductor layers (24, 28).

6. The ion surface trap (10) according to one of the preceding claims,
**characterized by** a magnetic field generator (36) that generates a magnetic field in a separating layer plane (E) of the separating layer so that a background tunnel current can be suppressed.

7. The ion surface trap (10) according to one of the claims 2 to 6, **characterized in that**
(a) at least one of the superconductor layers (24, 28) comprises at least two detection sections (24.1, 24.2) that are spatially separated and electrically insulated against each other, and that
(b) the detection sections (24.1, 24.2) are connected to the tunnel current change detector (31) in such a way that an impact point of the photon (20) can be determined.

8. The ion surface trap (10) according to one of the preceding claims,
**characterized by** an evaluation unit (38) that is designed to automatically carry out a method according to one of the claims 9 or 10.

9. A method for operating an ion surface trap (10) according to one of the preceding claims, **characterized by** the steps:
(i) introducing an ion (22) into the ion surface trap (10),
(ii) applying an AC voltage to the AC voltage electrodes (16.1, 16.2) so that the ion (22) remains trapped in the ion surface trap (10), and
(iii) detecting at least one photon (20) emitted by the ion (22) by means of the superconductor sensor (18).

10. The method for operating an ion surface trap (10) according to claim 9,
**characterized in that** the step of introducing an ion (22) into the ion surface trap (10) comprises the following steps:
(i) vaporizing a pure substance, producing a vapor,
(ii) photon-ionizing the vapor and
(iii) moving at least one ion (22) of the vapor into a trap volume of the ion surface trap (10).

## Revendications

1. Piège à ions surfacique (10) comprenant
(a) une paire d'électrodes (12) qui comprend une première électrode de piégeage (14.1) et une deuxième électrode de piégeage (14.2) et qui est conçue pour former un volume de piégeage pour au moins un ion (22) lors de l'application d'une tension électrique alternative,
(b) au moins deux électrodes à tension continue (16.1, 16.2) qui sont agencées pour fermer le volume de piégeage et/ou pour générer un champ électrique permettant de modifier une position ionique d'un ion (22), piégé dans le piège à ions surfacique (10), par rapport au piège à ions surfacique (10), et
(c) un capteur pour détecter des photons (20) émis par ledit au moins un ion (22),
**caractérisé en ce que**
(d) le capteur est un capteur supraconducteur (18) sensible à l'énergie ayant une structure couche supraconductrice - couche de séparation - couche supraconductrice, qui comprend une première couche supraconductrice (24), une couche de séparation (26) et une deuxième couche supraconductrice (28), et
(e) au moins la première couche supraconductrice (24) constitue la première électrode de piégeage (14.1).

2. Piège à ions surfacique (10) selon la revendication 1, **caractérisé en ce que**
(a) la couche de séparation (26) est une couche d'isolation disposée entre les couches supraconductrices (24, 28),
(b) une source de tension (30) est connectée aux couches supraconductrices (24, 28) de manière à obtenir une différence de potentiel constante (Δ_{U}) entre les couches supraconductrices (24, 28),
(c) le piège à ions surfacique (10) comprend un détecteur de variation de courant d'effet tunnel (31) pour détecter une variation d'un courant d'effet tunnel (I₂₆) à travers la couche d'isolation (26), et
(d) la couche d'isolation est agencée de telle sorte que le détecteur de variation de courant d'effet tunnel (31) détecte une variation de courant d'effet tunnel lorsqu'un photon (20) tombe sur l'une des couches supraconductrices (24, 28) ou sur la couche d'isolation.

3. Piège à ions surfacique (10) selon la revendication 2, **caractérisé en ce que**
(a) la couche de séparation (26) comprend une ou plusieurs couches collectrices (32) normalement conductrices, et
(b) la couche de séparation (26) est conçue de telle sorte que les électrons diffusant dans la couche de séparation (26) s'y accumulent et provoquent une augmentation du signal du capteur supraconducteur (18).

4. Piège à ions surfacique (10) selon l'une des revendications précédentes, **caractérisé par**
(a) un substrat (34) sur lequel sont appliquées la première électrode de piégeage (14.1) et la deuxième électrode de piégeage (14.2), la première couche supraconductrice (24), la deuxième couche supraconductrice (28) et la couche de séparation (26),
(b) la deuxième couche supraconductrice (28) étant isolée électriquement et séparée en potentiel de la première couche supraconductrice (24), et
(c) la deuxième électrode de piégeage (14.2) étant isolée et séparée en potentiel de la première électrode de piégeage (14.1).

5. Piège à ions surfacique (10) selon l'une des revendications 2 ou 3, **caractérisé en ce que**
la source de tension (30) est conçue pour appliquer une tension alternative commune (Uw) aux deux couches supraconductrices (24, 28).

6. Piège à ions surfacique (10) selon l'une des revendications précédentes, **caractérisé par** un générateur de champ magnétique (36) qui génère un champ magnétique dans un plan de couche de séparation (E) de la couche de séparation (26), de manière à permettre de supprimer un courant d'effet tunnel de fond.

7. Piège à ions surfacique (10) selon l'une des revendications 2 à 6, **caractérisé en ce que**
(a) au moins l'une des couches supraconductrices (24, 28) présente au moins deux portions de détection (24.1, 24.2) séparées spatialement l'une de l'autre et isolées électriquement l'une de l'autre, et **en ce que**
(b) les portions de détection (24.1, 24.2) sont connectées au détecteur de variation de courant d'effet tunnel (31) de manière à permettre de déterminer un lieu d'impact du photon (20).

8. Piège à ions surfacique (10) selon l'une des revendications précédentes, **caractérisé par** une unité d'évaluation (38) conçue pour mettre en œuvre automatiquement un procédé selon l'une des revendications 9 ou 10.

9. Procédé de fonctionnement d'un piège à ions surfacique (10) selon l'une des revendications précédentes, **caractérisé par** les étapes consistant à :
(i) introduire un ion (22) dans le piège à ions surfacique (10),
(ii) appliquer une tension continue aux électrodes de tension continue (16.1, 16.2) de sorte que l'ion (22) reste piégé dans le piège à ions surfacique (10), et
(iii) détecter au moyen du capteur supraconducteur (18) au moins un photon (20) qui a été émis par l'ion (22).

10. Procédé de fonctionnement d'un piège à ions surfacique (10) selon la revendication 9, **caractérisé en ce que** l'étape d'introduction d'un ion (22) dans le piège à ions surfacique (10) comprend les étapes suivantes consistant à :
(i) évaporer une substance pure de manière à produire une vapeur,
(ii) photo-ioniser la vapeur, et
(iii) déplacer au moins un ion (22) de la vapeur jusque dans un volume de piégeage du piège à ions surfacique (10).
